# FASCICULE DE BREVET EUROPEEN

(11) **EP 0 956 442 B1**
(45) Date de publication et mention de la délivrance du brevet: **04.09.2002**
(21) Numéro de dépôt: 97951320.7
(22) Date de dépôt: 12.12.1997
(51) Int. Cl.: F02M 25/07, F16L 23/16

(54) **DISPOSITIF DE RECIRCULATION DES GAZ D'ECHAPPEMENT D'UN MOTEUR A COMBUSTION INTERNE**
ABGASRÜCKFÜHRUNGSVORRICHTUNG FÜR EINE BRENNKRAFTMASCHINE
DEVICE FOR RECYCLING THE EXHAUST GASES OF AN INTERNAL COMBUSTION ENGINE

(30) Priorité: 13.12.1996 FR 9615328
(43) Date de publication de la demande: 17.11.1999
(73) Titulaire: Renault s.a.s., 92100 Boulogne Billancourt (FR); WESTAFLEX-AUTOMOBILE, 59058 Roubaix Cedex 1 (FR)
(72) Inventeur: COMA, Gilles, F-78170 La Celle Saint Cloud (FR); CORNELIUS, Michel, F-94220 Charenton le Pont (FR)
(74) Mandataire: Fernandez, Francis Lionel
(86) Numéro de dépôt international: FR9702283
(87) Numéro de publication internationale: WO98026173

(56) Documents cités:
- DE-A- 2 622 509
- FR-A- 2 693 252
- FR-A- 2 719 870
- US-A- 4 445 487
- US-A- 5 207 714
- US-A- 5 524 906

## Description

La présente invention concerne un dispositif de recirculation des gaz d'échappement d'un moteur à combustion interne destiné notamment à équiper un véhicule automobile.

Les normes concernant la pollution et la consommation des moteurs à combustion interne équipant les véhicules automobiles, se sévérisent chaque jour davantage dans l'ensemble des pays industrialisés. L'industrie automobile est donc aujourd'hui occupée à trouver des solutions techniques pour répondre à ces obligations et ce, sans trop pénaliser ni les performances des moteurs ni leur prix de revient.

Une technique connue de réduction des oxydes d'azote NOx, qui forment avec les hydrocarbures imbrûlés HC et le monoxyde de carbone CO les principaux polluants émis par les moteurs à combustion interne, consiste à opérer la recirculation d'une partie des gaz d'échappement dans les gaz frais d'admission. Cette technique consiste donc à réinjecter une quantité prédéterminée de gaz brûlés suivant les conditions de fonctionnement du moteur, dans le collecteur d'admission. Cet apport de gaz brûlés dans les gaz frais a pour effet de réduire la proportion de ces derniers au sein du mélange carburé introduit dans la chambre de combustion et donc d'abaisser la température de combustion, ce qui engendre une diminution de la production des NOx ou oxydes d'azote.

Le procédé généralement adopté est la "recirculation externe" des gaz d'échappement à l'aide d'une vanne EGR (Recyclage des Gaz d'Echappement) fermant ou ouvrant une conduite reliant le collecteur d'échappement et le collecteur d'admission. La vanne EGR est pilotée de façon à doser la quantité des gaz d'échappement admis à recirculer suivant les conditions de fonctionnement du moteur.

Il est connu d'opérer cette injection des gaz d'échappement à travers le collecteur d'admission par l'intermédiaire d'un élément de conduite tubulaire rapporté, ce dernier possédant un orifice d'injection adapté de manière à assurer une répartition homogène des gaz d'échappement dans le collecteur d'admission. De tels dispositifs permettent d'optimiser le fonctionnement du moteur en égalisant la répartition des gaz brûlés dans chacun des cylindres du moteur.

Un exemple de ce type de dispositif est décrit et représenté dans le document FR-A-2 719 870 déposé par la demanderesse.

De tels dispositifs présentent l'inconvénient de ne pas être parfaitement étanche au niveau du raccordement de l'élément de conduite tubulaire rapporté, ce dernier comportant une collerette enserrée entre la surface extérieure du collecteur d'admission et une bride disposée à l'extrémité du circuit de recirculation dont les défauts de planéité ou les déformations sous les efforts de serrage peuvent générer des fuites de gaz vers l'atmosphère.

La présente invention a donc pour objet un perfectionnement du dispositif de recirculation des gaz d'échappement de moteur à combustion décrit dans le document FR-2 719 870 remédiant aux inconvénients précités tout en assurant une répartition homogène des gaz d'échappement dans le collecteur d'admission et qui soit à la fois simple et économique à réaliser.

Le dispositif de recirculation des gaz d'échappement d'un moteur à combustion interne, selon l'invention comprend un circuit de recirculation des gaz d'échappement du collecteur d'échappement au collecteur d'admission comportant à une de ses extrémités un élément de conduite tubulaire destiné à pénétrer dans le collecteur d'admission à travers une ouverture correspondante en faisant saillie dans ce collecteur, l'élément de conduite tubulaire comportant une collerette destinée à être enserrée entre la surface extérieure du collecteur et une bride solidaire de l'extrémité du circuit.

Selon l'invention le dispositif de recirculation des gaz d'échappement est caractérisé en ce que la collerette comporte un bossage destiné à entourer l'ouverture de façon à assurer l'étanchéité du dispositif lors du serrage de la bride.

Selon une autre caractéristique du dispositif de recirculation des gaz d'échappement conformément à l'invention, l'élément de conduite tubulaire comporte un orifice d'injection des gaz d'échappement s'étendant sensiblement sur toute la longueur de la partie de l'élément de conduite tubulaire engagée dans le collecteur d'admission.

Selon une autre caractéristique du dispositif de recirculation des gaz d'échappement conformément à l'invention, l'élément de conduite tubulaire est constitué d'un assemblage de pièces en tôle d'inox soudées entre elles.

Selon une autre caractéristique du dispositif de recirculation des gaz d'échappement conformément à l'invention, l'élément de conduite tubulaire est réalisé à partir d'une tôle inox rectangulaire mise sous forme tubulaire de façon à former une portion de paroi tubulaire ouverte sur sensiblement un quart de sa circonférence, la portion de paroi tubulaire recevant une paroi transversale à une extrémité axiale et une plaque métallique formant la collerette à l'autre extrémité, la paroi transversale et la collerette étant réalisées par emboutissage puis assemblées à la portion de paroi tubulaire par des points de soudage.

Selon une autre caractéristique du dispositif de recirculation des gaz d'échappement conformément à l'invention, la collerette comporte deux trous pour le passage des vis de fixation de la bride sur le collecteur et un élément détrompeur assurant l'orientation de l'élément de conduit tubulaire lors du montage de ce dernier.

Selon une autre caractéristique du dispositif de recirculation des gaz d'échappement conformément à l'invention, le circuit de recirculation comporte une vanne de régulation des gaz d'échappement venant se fixer sur le collecteur d'admission, la vanne intégrant la bride de fixation.

On comprendra mieux les buts, aspects et avantages de la présente invention, d'après la description présentée ci-après d'un mode de réalisation de l'invention, donné à titre d'exemple non limitatif, en se référant au dessin annexé, dans lequel :
- la figure 1 est une vue générale en perspective du dispositif de recirculation des gaz d'échappement selon l'invention ;
- la figure 2 est une vue en perspective du conduit tubulaire rapporté du dispositif de recirculation des gaz d'échappement selon l'invention ;
- la figure 3 est une vue en coupe axiale suivant la ligne III-III du conduit tubulaire rapporté représenté sur la figure 2;

Seuls les éléments nécessaires à la compréhension de l'invention ont été représentés. Pour faciliter la lecture des dessins les mêmes éléments portent les mêmes références d'une figure à l'autre.

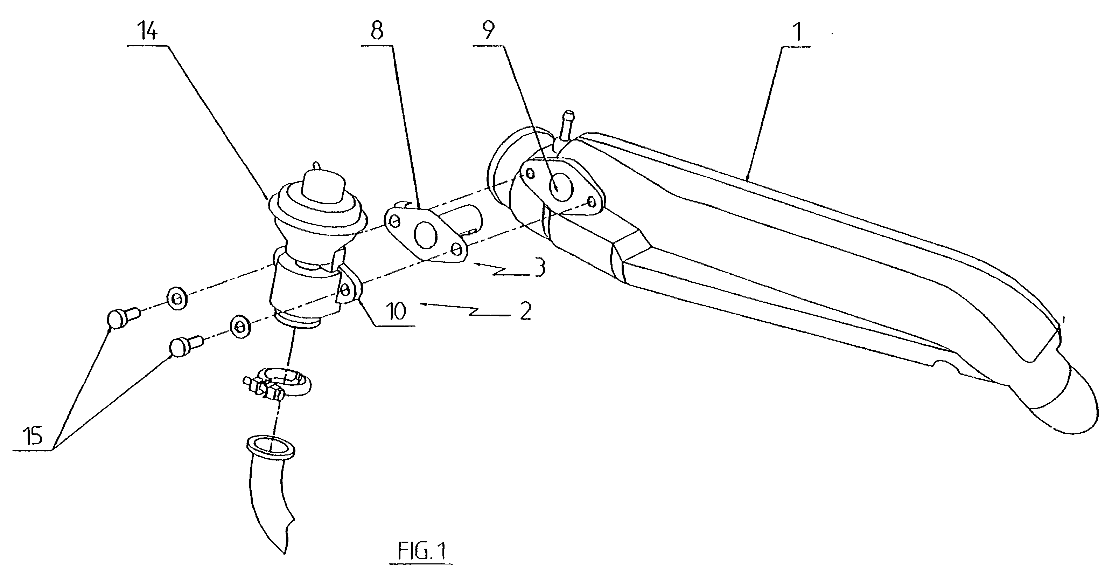

La figure 1 présente le raccordement du circuit de recirculation 2 des gaz d'échappement d'un moteur à combustion interne, tel que par exemple un moteur à allumage par compression, avec le collecteur d'admission 1 de ce dernier. Le circuit de recirculation 2 comporte une vanne de régulation 14 des gaz d'échappement permettant d'ajuster le débit des gaz d'échappement recirculés suivant les conditions de fonctionnement du moteur.

La vanne de régulation 14 présente une bride 10 permettant sa connexion, à l'aide de deux vis de fixation 15, à une ouverture 9 correspondante du collecteur d'admission 1, cette dernière étant disposée en aval du papillon des gaz pour les moteurs qui en sont équipés.

Un élément de conduite tubulaire 3 est rapporté entre la bride 10 et le collecteur d'admission 1 de manière à assurer la répartition homogène des gaz d'échappement dans le collecteur d'admission 1. Cet élément de conduite tubulaire 3 s'étend à travers l'ouverture 9 en saillie à l'intérieur du collecteur d'admission 1, de façon sensiblement perpendiculaire à l'axe longitudinal de ce dernier, et comporte une collerette 8 venant s'interposer entre la bride 10 et le collecteur d'admission 1, la collerette 8 présentant deux trous 13 pour le passage des vis de fixation 15 afin de permettre l'immobilisation en position de l'élément de conduite 3.

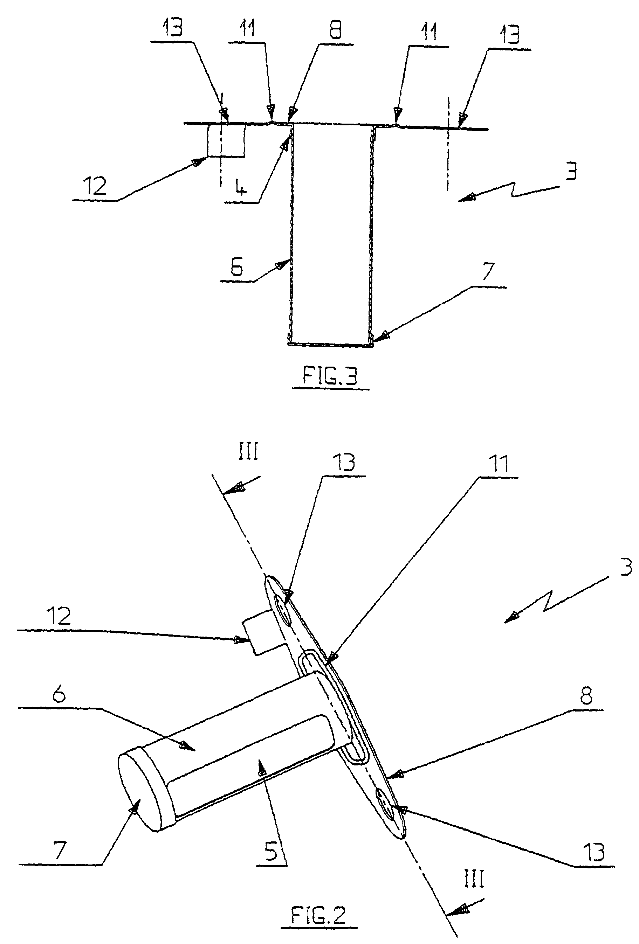

Comme on peut le voir plus précisément sur les figures 2 et 3 représentant l'élément de conduite tubulaire 3, la collerette 8 est assemblée par soudage à un élément de paroi tubulaire 6, une extrémité de ce dernier venant s'engager dans un collet 4 de la collerette 8, l'autre extrémité de l'élément de paroi tubulaire 6 étant obturée par une paroi transversale 7.

L'élément de conduite 3 ainsi réalisé présente un orifice 5 d'injection des gaz d'échappement réalisé par une ouverture pratiquée dans l'élément de paroi tubulaire 6 sur toute sa longueur et sur sensiblement un quart de sa circonférence. Cet orifice 5 est orienté de façon à injecter les gaz d'échappement sensiblement dans le même sens que celui de l'écoulement des gaz frais dans le collecteur d'admission 1.

Le positionnement de l'élément de conduite 3 par les deux trous 13 de la collerette 8 offrant deux positions de montage opposées à 180°, cette dernière possède un élément détrompeur formé par une patte 12 s'étendant sensiblement selon un plan perpendiculaire au plan de la collerette 8 de manière à coopérer avec un bord du collecteur d'admission 1 pour n'offrir qu'une seule possibilité de montage de l'élément de conduite 3.

La collerette 8 de l'élément de conduite 3 présente par ailleurs un bossage 11 entourant le collet 4, ce bossage 11 étant en saillie sur environ 1 mm de hauteur par rapport à la face de la collerette 8 destinée à venir en appui contre la bride 10 de la vanne de régulation 14.

L'élément de conduite tubulaire 3 ainsi défini est facilement réalisable en tôle d'inox d'épaisseur 0.4mm, la collerette 8 et la paroi transversale 7 pouvant être fabriquées directement par emboutissage, l'élément de conduite tubulaire 6 étant quant à lui préformé sous forme tubulaire, en prévoyant l'ouverture correspondante à l'orifice 5, puis soudé en trois points régulièrement répartis sur le collet 4 et la paroi transversale 7.

Le dispositif ainsi réalisé permet d'une façon simple et économique d'optimiser la diffusion des gaz d'échappement recyclés dans le collecteur d'admission 1 tout en éliminant les fuites au niveau de la liaison bride 10, collerette 8 et collecteur d'admission 1.

La collerette 8 étant interposée entre la bride 10 et le collecteur d'admission 1, la surépaisseur provoquée par le bossage 11 vient compenser les défauts habituellement à l'origine de fuites, tels que les défauts de planéité de la surface du collecteur d'admission 1 destinée à recevoir la collerette 8 ou bien encore la déformation de la bride 10 sous les efforts de serrage des vis de fixation 15. En effet, le bossage 11, en se déformant localement sous les efforts de serrage, permet d'assurer le contact continu entre la bride 10, la collerette 8 et le collecteur d'admission 1 et ainsi d'établir une parfaite étanchéité de la liaison.

Par ailleurs, l'orifice 5 tout en étant fort simple de réalisation permet une excellente diffusion des gaz d'échappement dans le collecteur d'admission 1, son orientation et ses dimensions étant choisies de façon à diriger les gaz d'échappement uniformément dans les différents conduits du collecteur d'admission 1 alimentant les cylindres du moteur.

Bien entendu, l'invention n'est nullement limitée au mode de réalisation décrit et illustré qui n'a été donné qu'à titre d'exemple.

## Revendications

1. Dispositif de recirculation des gaz d'échappement d'un moteur à combustion interne, du type comprenant un circuit de recirculation (2) des gaz d'échappement du collecteur d'échappement au collecteur d'admission (1), le circuit de recirculation (2) comportant à une de ses extrémités un élément de conduite tubulaire (3) destiné à pénétrer dans le collecteur d'admission (1) à travers une ouverture (9) correspondante en faisant saillie dans ce collecteur (1), ledit élément de conduite tubulaire (3) comportant une collerette (8) destinée à être enserrée entre la surface extérieure du collecteur (1) et une bride (10) solidaire de l'extrémité dudit circuit (2), **caractérisé en ce que** ladite collerette (8) comporte un bossage (11) destiné à entourer ladite ouverture (9) de façon à assurer l'étanchéité du dispositif lors du serrage de la bride (10), ledit élément de conduite tubulaire (3) comportant un orifice (5) d'injection des gaz d'échappement s'étendant sensiblement sur toute la longueur de la partie de l'élément de conduite tubulaire (3) engagée dans le collecteur d'admission (1)

2. Dispositif de recirculation des gaz d'échappement selon la revendication 1, **caractérisé en ce que** l'élément de conduite tubulaire (3) est constitué d'un assemblage de pièces en tôle d'inox soudées entre elles.

3. Dispositif de recirculation des gaz d'échappement selon la revendication 2, **caractérisé en ce que** l'élément de conduite tubulaire (3) est réalisé à partir d'une tôle inox rectangulaire mise sous forme tubulaire de façon à former une portion de paroi tubulaire (6) ouverte sur sensiblement un quart de sa circonférence, ladite portion de paroi tubulaire (6) recevant une paroi transversale (7) à une extrémité axiale et une plaque métallique formant la collerette (8) à l'autre extrémité, ladite paroi transversale (7) et ladite collerette (8) étant réalisées par emboutissage puis assemblées à ladite portion de paroi tubulaire (6) par des points de soudage.

4. Dispositif de recirculation des gaz d'échappement selon l'une quelconque des revendications 1 à 3, **caractérisé en ce que** la collerette (8) comporte deux trous (13) pour le passage des vis de fixation de la bride (10) sur le collecteur (1) et un élément détrompeur (12) assurant l'orientation de l'élément de conduit tubulaire (3) lors du montage de ce dernier.

5. Dispositif de recirculation des gaz d'échappement selon l'une quelconque des revendications 1 à 4, **caractérisé en ce que** le circuit de recirculation (2) comporte une vanne de régulation (14) des gaz d'échappement venant se fixer sur le collecteur d'admission (1), ladite vanne (14) intégrant ladite bride de fixation (10).

## Patentansprüche

1. Vorrichtung zur Rückführung der Auspuffgase eines Verbrennungsmotors mit einem Kreislauf (2) zur Rückführung der Auspuffgase vom Auspuffkrümmer zum Ansaugkrümmer (1), wobei der Rückführungskreislauf (2) an einem seiner Enden ein rohrförmiges Leitungselement (3) umfasst, das dazu bestimmt ist, in den Ansaugkrümmer (1) durch eine entsprechende Öffnung (9) einzudringen, so dass es in diesen Krümmer (1) vorragt, wobei das rohrförmige Leitungselement (3) einen Kragen (8) umfasst, der dazu bestimmt ist, zwischen der äußeren Fläche des Krümmers (1) und einem fest mit dem Ende des Kreislaufs (2) verbundenen Flansch (10) eingespannt zu werden, **dadurch gekennzeichnet, dass** der Kragen (8) eine Vorwölbung (11) aufweist, die dazu bestimmt ist, die Öffnung (9) so zu umgeben, dass die Dichtigkeit der Vorrichtung beim Befestigen des Flansches (10) gewährleistet ist, wobei das rohrförmige Leitungselement (3) einen Einlass (5) zum Einspritzen der Auspuffgase umfasst, der sich annähernd über die gesamte Länge des Teils des rohrförmigen Leitungselements (3) erstreckt, der in den Ansaugkrümmer (1) eingefügt ist.

2. Vorrichtung zur Rückführung der Auspuffgase nach Anspruch 1, **dadurch gekennzeichnet, dass** das rohrförmige Leitungselement (3) aus einer Zusammenfügung von Teilen aus rostfreiem Blech gebildet wird, die miteinander verschweißt sind.

3. Vorrichtung zur Rückführung der Auspuffgase nach Anspruch 2, **dadurch gekennzeichnet, dass** das rohrförmige Leitungselement (3) ausgehend von einem rechteckigen rostfreien Blech gebildet wird, das in rohrförmige Form gebracht wird, so dass es einen rohrförmigen Wandteil (6) bildet, der auf annähernd einem Viertel seines Umfangs offen ist, wobei der rohrförmige Wandteil (6) an einem axialen Ende eine Querwand (7) und am anderen Ende eine den Kragen (8) bildende Metallplatte aufnimmt, und wobei die Querwand (7) und der Kragen (8) durch Ziehen gebildet und sodann an den rohrförmigen Wandteil (6) durch Schweißpunkte angefügt werden.

4. Vorrichtung zur Rückführung der Auspuffgase nach einem der Ansprüche 1 bis 3, **dadurch gekennzeichnet, dass** der Kragen (8) zwei Löcher (13) zum Durchlass der Schrauben zur Befestigung des Flansches (10) am Krümmer (1) und ein Element zur Unverwechselbarmachung (12) umfasst, das für die Ausrichtung des rohrförmigen Leitungselements (3) bei der Montage des letztgenannten sorgt.

5. Vorrichtung zur Rückführung der Auspuffgase nach einem der Ansprüche 1 bis 4, **dadurch gekennzeichnet, dass** der Rückführungskreislauf (2) ein Ventil (14) zur Regulierung der Auspuffgase umfasst, das am Ansaugkrümmer (1) befestigt wird, wobei das Ventil (14) den Befestigungsflansch (10) umfasst.

## Claims

1. An arrangement for recirculation of the exhaust gases from an internal combustion engine of the type comprising a -recirculation circuit (2) for recirculating the exhaust gases from the exhaust manifold to the induction manifold (1), the recirculation circuit (2) comprising at one of its ends a tubular conduit element (3) intended to penetrate into the induction manifold (1) through a corresponding opening (9) in projecting relationship into said manifold (1), said tubular conduit element (3) comprising a collar (8) intended to be gripped between the external surface of the manifold (1) and a flange (10) which is fixed with respect to the end of said circuit (2), **characterised in that** said collar (8) comprises a boss (11) intended to surround said opening (9) in such a way as to ensure sealing integrity of the arrangement upon clamping of the flange (10), said tubular conduit element (3) comprising an orifice (5) for injection of the exhaust gases which extends substantially over the whole length of the part of the tubular conduit element (3) which is engaged into the induction manifold (1).

2. An exhaust gas recirculation arrangement according to claim 1 **characterised in that** the tubular conduit element (3) is made up of an assembly of pieces of stainless steel plate welded together.

3. An exhaust gas recirculation arrangement according to claim 2 **characterised in that** the tubular conduit element (3) is made from a rectangular stainless steel plate put into tubular shape so as to form a tubular wall portion (6) which is open over substantially a quarter of its circumference, said tubular wall portion (6) receiving a transverse wall (7) at an axial end and a metal plate forming the collar (8) at the other end, said transverse wall (7) and said collar (8) being produced by stamping and then assembled to said tubular wall portion (6) by spot welds.

4. An exhaust gas recirculation arrangement according to one of claims 1 to 3 **characterised in that** the collar (8) comprises two holes (13) for passing the screws for fixing the flange (10) to the manifold (1) and an aligning element (12) ensuring proper orientation of the tubular conduit element (3) upon mounting of the latter.

5. An exhaust gas recirculation arrangement according to any one of claims 1 to 4 **characterised in that** the recirculation circuit (2) comprises a valve (14) for regulating the exhaust gases, which is fixed on the induction manifold (1), said valve (14) integrating said fixing flange (10).
